# EUROPÄISCHE PATENTSCHRIFT

(11) **EP 3 506 468 B1**
(45) Veröffentlichungstag und Bekanntmachung des Hinweises auf die Patenterteilung: **11.08.2021**
(21) Anmeldenummer: 19153151.6
(22) Anmeldetag: 30.04.2015
(51) Int. Cl.: H02K 15/02, B32B 15/01

(54) **VORRICHTUNG UND VERFAHREN ZUM VERBINDEN VON BLECHTEILEN ZU EINEM BLECHPAKET**
DEVICE AND METHOD FOR CONNECTING SHEET METAL TO A SHEET PACKAGE
DISPOSITIF ET PROCÉDÉ D'ASSEMBLAGE DES PARTIES DE TÔLES POUR FORMER UN PAQUET DE TÔLES

(43) Veröffentlichungstag der Anmeldung: 03.07.2019
(62) Teilanmeldung aus: 15166084.2
(73) Patentinhaber: voestalpine Automotive Components Dettingen GmbH & Co. KG, 72581 Dettingen an der Erms (DE)
(72) Erfinder: Kauffmann, Jochen, 73061 Ebersbach (DE); Lanksweirt, Jochen, 89522 Heidenheim (DE); Bursy, Heinrich, 73268 Erkenbrechtsweiler (DE)
(74) Vertreter: Jell, Friedrich

(56) Entgegenhaltungen:
- EP-A1- 1 868 016
- EP-A1- 2 450 189
- WO-A1-2014/089593
- WO-A2-2012/027856
- DE-A1- 2 411 560
- JP-A- S5 450 919
- US-A1- 2013 316 122

## Beschreibung

Die Erfindung betrifft eine Vorrichtung und ein Verfahren zum Verbinden von Blechteilen zu einem Blechpaket, bei dem Blechteile von einem Elektroband freigestanzt werden, die freigestanzten Blechteile gestapelt und zu mehreren Blechpaketen zumindest stoffschlüssig verbunden werden, wobei zumindest zwischen zwei gestapelten Blechteilen ein Trennmittel vorgesehen wird, um die Trennung der stoffschlüssig verbundenen Blechteile in Blechpakete zu erleichtern.

Um die beim Stanzpaketieren vor- oder selbst endverklebten Blechteile in Blechpakete auftrennen zu können, ist es aus dem Stand der Technik bekannt (WO2014/089593A1), zwischen zwei in einer als Paketbremse ausgeführten Stapeleinrichtung eines Folgestanzwerkzeugs gestapelten Blechteilen ein Trennmittel vorzusehen. Dies geschieht, indem vor dem Folgestanzwerkzeug eine Trennfolie als Trennmittel auf das Elektroband bereichsweise auflaminiert wird, welches Trennmittel auf dem freigestanzten Blechteil als Trennhilfe zwischen in der Stapeleinrichtung aneinander anschließenden Blechpaketen dient. Nachteilig bedarf es bei der Applizierung des Trennmittels einer exakten Positionierung in Hinblick auf jenes abzutrennende Blechteil, das als Ende oder Anfang eines Blechpakets die Teilung der Blechpakete in der Paketbremse markiert. Diese Positionierung ist daher verfahrenstechnisch vergleichsweise aufwendig und bedarf diverser Steuerungs- und/oder Regelkreise, um beispielsweise Abweichungen im Vorschub des Elektrobands kompensieren zu können - was eine Voraussetzung für den Erhalt formgenauer Blechpakete ist.

Ein Stand der Technik nach dem Oberbegriff des Anspruchs 1 und 9 ist aus der JP S54 50919 A bekannt.

Die Erfindung hat sich daher die Aufgabe gestellt, ein Verfahren der eingangs geschilderten Art derart zu verbessern, dass die Applikation eines Trennmittels reproduzierbar erfolgen kann. Zudem soll die Applikation eines Trennmittels in der Handhabung einfach sein.

Die Erfindung löst die gestellte Aufgabe hinsichtlich des Verfahrens durch die Merkmale des Anspruchs 1.

Wird mit der Stanzstufe zum Freistanzen des Blechteils das Trennmittel von einem Endlosband sowohl freigestanzt als auch auf dem Blechteil vorgesehen, kann zunächst eine verfahrenstechnisch einfache Lösung zur Applikation eines Trennmittels zwischen zwei Blechteilen vorgegeben werden. Es bedarf nämlich im Gegensatz zum Stand der Technik nicht eines eigenen Verfahrensschritts zur Applikation des Trennmittels, da für diese Applikation jener Verfahrensschritt, der beim Freistanzen des Blechteils Verwendung findet, mitgenutzt werden kann. Die Handhabung des erfindungsgemäßen Verfahrens kann dadurch erheblich erleichtert werden. Besonders aber kann sich die Erfindung gegenüber dem Stand der Technik abheben, da mit der Applikation des Trennmittels in der Stanzstufe zum Freistanzen des Blechteils sichergestellt werden kann, dass das Trennmittel stets an jenem freigestanzten Blechteil vorgesehen wird, bei dem die Trennung der gestapelten Blechteile zu maßgenauen Blechpakete zu erfolgen hat. Die Verlagerung der Applikation des Trennmittels zum letzen Stanzschritt des Blechteils bzw. zu seinem Freistanzen kann nämlich das Verfahren beispielsweise von eventuell vorhandenen Toleranzen in einem vorhergehenden Verfahrensschritt entkoppeln. Trotz einer vergleichsweise einfachen Handhabung des Verfahrens kann damit eine besonders hohe Reproduzierbarkeit gewährleist werden. Derartige Blechpakete, insbesondere Elektroblechpakete, sind daher für elektrische Maschinen bzw. elektrische bzw. elektromagnetische Anwendungen besonders geeignet.

Die Führung des Endlosbands kann weiter vereinfacht werden, wenn das Trennmittel vom oberhalb des Elektrobands geführten Endlosband freigestanzt wird. Das Elektroband liegt dadurch nämlich nicht auf dem Endlosband auf, was Zugbelastungen bei einem Vorschub des Elektrobands auf das Endlosband und damit eine Beschädigungsgefahr vermeiden kann.
Wird vor dem Freistanzen des Blechteils das Trennmittel vom Endlosband freigestanzt und an eine Schneide dieser Stanzstufe gehalten, kann eine exakte Führung des freigestanzten Trennmittels gewährleistet werden. Dieses Halten kann beispielsweise mit einem Ansaugen verfahrenstechnisch einfach gelöst werden.

Im Allgemeinen wird erwähnt, dass es sich beim Elektroband um ein Halbzeug aus Stahl, beispielsweise als kaltgewalztes nicht kornorientiertes Elektroband im schlussgeglühten Zustand (DIN EN10106) oder als kornorientiertes Elektroband im schlussgeglühten Zustand (DIN EN10107) ausgeführt, handeln kann.
Zudem wird im Allgemeinen erwähnt, dass das Endlosband im Trägermaterial Kunststoff, Gewebe, Papier, Backpapier oder eine Kombination daraus mit oder ohne Beschichtung aufweisen kann. Als Endlosband kann beispielsweise ein von einer Vorratsrolle abgezogenes Band verstanden werden, beispielsweise in Form einer Folie. Im Allgemeinen ist jedoch jede Form und/oder jedes Material als Endlosband vorstellbar, aus dem ein Trennmittel freigestanzt werden kann, das die Trennung der stoffschlüssig verbundenen Blechteile in Blechpakete erleichtert, beispielsweise durch Verringerung der Haftung zu mindestens einem der an das Trennmittel angrenzenden Blechteile. Hierfür ist beispielsweise eine Antihaftbeschichtung auf mindestens einer Flachseite des Endlosbands bzw. des Trennmittels denkbar.

Diese Reproduzierbarkeit kann auch dann erhalten bleiben, wenn die Blechteile aus dem Elektroband folgegestanzt werden, da wie bereits erwähnt, die vorhergehenden Verfahrensschritte auf eine positionsgenaue Applikation des Trennmittels auf die Blechteile erfindungsgemäß keinen Einfluss nehmen können.

Vorzugsweise wird das Elektroband vor dem Freistanzen wenigstens bereichsweise mit einer aushärtbaren, polymeren Klebstoffschicht beschichtet, um das stoffschlüssige Verbinden der Blechteile zu formstabilen Blechpaketen zu unterstützen. Als Klebstoffschicht kann sich bevorzugt eine, insbesondere heißhärtende, Backlackschicht eignen. Im Allgemeinen wird erwähnt, dass die Klebstoffschicht einseitig oder bevorzugt beidseitig auf die Flachseite des Elektrobands vorgesehen sein kann.

Bevorzugt wird das Trennmittel auf der Klebstoffschicht des Blechteils aufgebracht, um dieses nach dem Freistanzen am Blechteil zu fixieren. Eine korrekte Führung des Trennmittels beim Stapeln der Blechteile kann damit sichergestellt werden. Besonders kann dies von Vorteil sein, wenn die Blechpakete segmentierte Lagen aus mehreren Blechteilen aufweisen und beim Stapeln der Blechteile die Blechpakete bewegt bzw. gedreht werden müssen. Die erfindungsgemäß am Blechteil fixierten Trennmittel können dieser Bewegung sicher folgen - was die Reproduzierbarkeit des Verfahrens weiter erhöhen kann.

Verlaufen die Vorschubrichtungen von Endlosband und Elektroband in der Stanzstufe geneigt, insbesondere normal, zueinander, kann man die Führung des Endlosbands von jener des Elektrobands trennen und so die Handhabung des Verfahrens weiter vereinfachen.

Um das Trennmittel nach dem Trennen der Blechpakete auf einfache Weise vom Blechpaket zu entfernen, kann vorgesehen werden, dass das Trennmittel mit einer Antihaftbeschichtung versehen wird. Außerdem kann diese Antihaftbeschichtung der einfachen Trennung der Blechpakete dienlich sein.

Wird das Endlosband vor dem Freistanzen des Trennmittels der Kontur des Blechteils folgend angeschnitten, kann eine hohe Maßgenauigkeit am Trennmittel sichergestellt werden. Dadurch kann es beispielsweise auch vorstellbar sein, das Trennmittel am Blechpaket haftend zu lassen und dieses beispielsweise als Schutz des Blechpakets nützen.

Die Erfindung hat sich außerdem die Aufgabe gestellt, eine Vorrichtung zum Verbinden von Blechteilen zu einem Blechpaket derart konstruktiv zu verändern, dass die Applikation eines Trennmittels exakt erfolgen kann, um formgenaue Blechpakete herstellen zu können. Zudem soll die Vorrichtung konstruktiv einfach ausgestaltet sein.

Die Erfindung löst die gestellte Aufgabe hinsichtlich der Vorrichtung durch die Merkmale des Anspruchs 9.

Indem die Zuführeinrichtung ein Endlosband aufweist und dieses der Stanzstufe derart zuführt, dass mit dieser Stanzstufe das Trennmittel vom Endlosband sowohl freigestanzt als auch auf dem Blechteil vorgesehen wird, kann im Gegensatz zum Stand der Technik sichergestellt werden, dass das Trennmittel stets an jenem freigestanzten Blechteil vorgesehen wird, bei dem die Trennung der gestapelten Blechteile zu maßgenauen Blechpakete zu erfolgen hat. Zudem ist diese Zuführung des Endlosbands konstruktiv vergleichsweise einfach zu lösen, zumal damit auf die Führung des Elektrobands nicht Rücksicht genommen werden muss. Es kann sich auf diese Weise zudem eine besonders standfeste Vorrichtung ergeben.
Das Trennmittel kann vom oberhalb des Elektrobands geführten Endlosband sicher freigestanzt werden, wenn die Stanzstufe einen Niederhalter aufweist, wobei der Niederhalter einen Führungsspalt aufweist, durch den das Endlosband zum Freistanzen des Trennmittels vor dem Blechteil durchgeführt wird.

Verlaufen die Vorschubrichtungen des Elektrobands und des Endlosbands in der Stanzstufe geneigt, insbesondere normal, zueinander, kann der konstruktive Aufwand zum Erhalt einer getrennten Führung von Elektroband und Endlosband weiter vermindert werden.

In den Figuren ist der Erfindungsgegenstand beispielsweise anhand einer Ausführungsvariante dargestellt. Es zeigen
- Fig. 1: eine schematische Ansicht auf eine Vorrichtung zur Blechpaketierung und
- Fig. 2: eine Draufsicht auf das Folgestanzwerkzeug der Vorrichtung nach Fig. 1,
- Fig. 3: eine abgerissene Detailansicht zur Paketbremse der Fig. 1 und
- Fig. 4: eine abgerissene Seitansicht zur Stanzstufe der Vorrichtung nach Fig. 1.

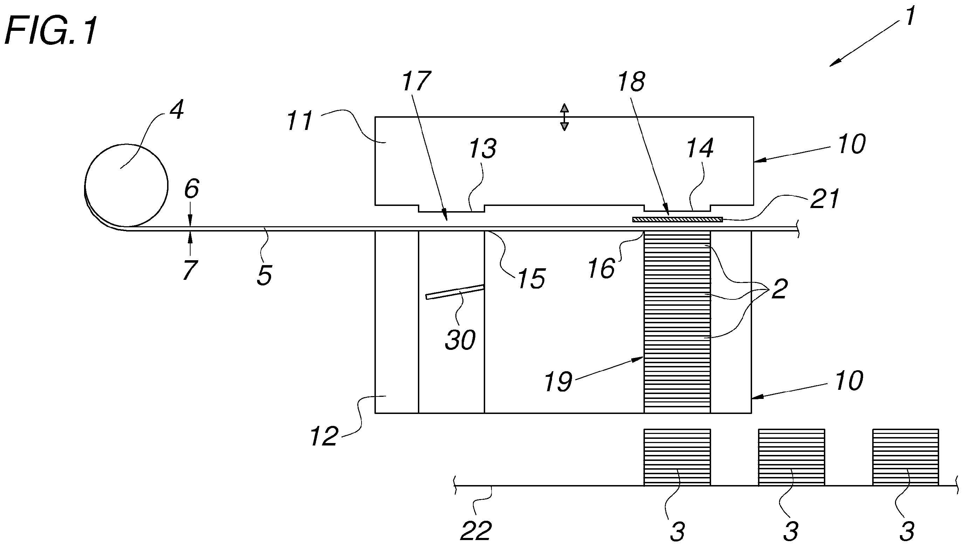

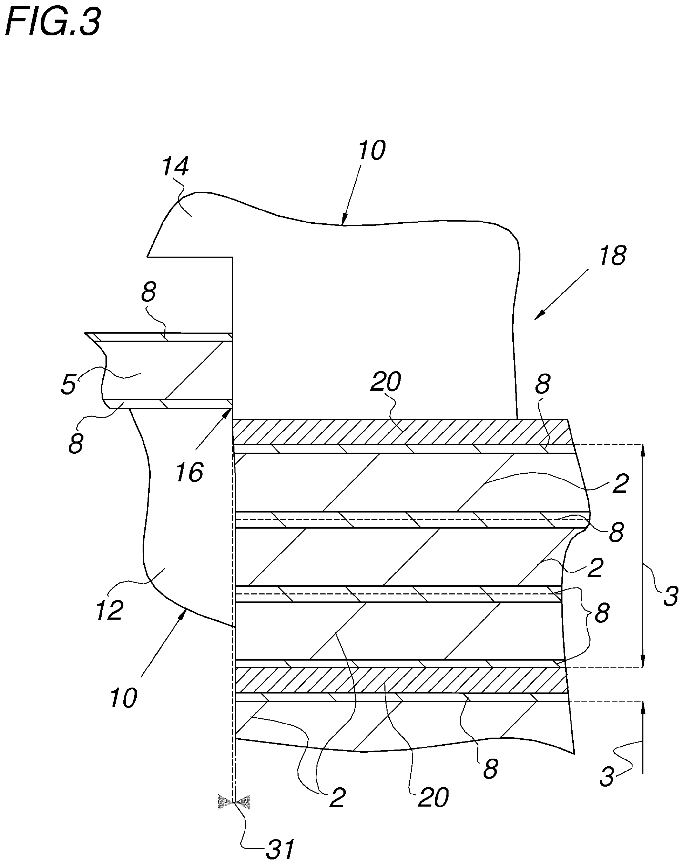

Gemäß dem Ausführungsbeispiel in Fig. 1 wird eine Vorrichtung 1 zur Durchführung des erfindungsgemäßen Verfahrens schematisch dargestellt. Diese Vorrichtung 1 dient zum Paketieren von freigestanzten Blechteilen 2 zu Blechpaketen 3. Hierzu wird von einem Coil 4 ein Elektroband 5 abgehaspelt, welches auf beiden Bandseiten 6, 7 eine vollflächige polymeren Klebstoffschicht 8, nämlich einen heißhärtenden Backlack, aufweist, welche Klebstoffschicht 8 beispielsweise in der Fig. 3 zu erkennen ist. Vom backlackbeschichteten Elektroband 5 werden mithilfe eines Folgestanzwerkzeugs 10 mehrere Blechteile 2 freigestanzt. Solch ein Freigestanzten kann - im Allgemeinen erwähnt - ein Ausschneiden, Abschneiden, Ausklinken, Beschneiden, Zerteilen durch Ausdrücken etc. sein.

Wie außerdem in der Fig. 1 zu entnehmen ist, führt das Stanzwerkzeug 10, beispielsweise hier ein Folgestanzwerkzeug, ein Schneiden mit mehren Hüben durch, indem sein Oberwerkzeug 11 mit seinem Unterwerkzeug 12 zusammenwirkt. Mit einer ersten Schneide 13 des Oberwerkzeugs 11 wird das Elektroband 5 für ein Freistanzen vorbearbeitet, wonach mit einer zweiten Schneide 14 des Oberwerkzeugs 11 aus dem Elektroband 5 das Blechteil 2 freigestanzt bzw. damit vereinzelt wird. Hierzu wirken die Schneiden 13, 14 mit den jeweiligen Matrizen 15, 16 des Unterwerkzeugs 12 zusammen und bilden damit im Stanzwerkzeug 10 zwei Stanzstufen 17, 18 aus.

Solch ein Folgeschneiden ist in der Fig. 1 daran zu erkennen, dass beim Vorbearbeiten ein Teil 30 vom Elektroband 5 abgetrennt werden, um das Elektroband 5 für das Freistanzen des Blechteils 2 vorzubereiten. Danach werden mithilfe der Stanzstufen 18 die Blechteile 2 freigestanzt und durch Druck des Oberwerkzeugs 11 in eine Stapeleinrichtung 19 gedrängt und dort gestapelt, die eine sich teilweise verjüngende Führung 31 im Unterwerkzeug 12 aufweist. Diese Führung 31 im Unterwerkzeug übt die Wirkung einer Paketbremse auf die Blechteile 2 aus, wodurch die Blechteile 2 unter Druck des Oberwerkzeugs 11 und mithilfe der zwischen den Blechteilen 2 vorhandenen polymeren Klebstoffschicht 8 eine feste physikalische und/oder chemische Verbindung eingehen. Im Allgemeinen wird erwähnt, dass die Stapeleinrichtung 19 auch aktiv beheizt werden kann, um die stoffschlüssige Verbindung der Blechteile 2 zu verbessern.

Außerdem können die Blechpakete 3 nicht näher dargestellten weiteren Aushärtungsschritten unterworfen werden, um die stoffschlüssige Verbindung zwischen den Blechteilen 2 zu stärken. Nicht näher dargestellt ist außerdem die Möglichkeit, einer Drehung der Stapeleinrichtung 19, um beispielsweise segmentierte Blechpakete 3 aus Lagen mit mehreren nebeneinander angeordneten und übereinander gestapelten Blechteilen 2 auszubilden. Im Allgemeinen wird erwähnt, dass - nicht dargestellt - alternativ zur Verjüngung auch ein Gegenhalter in der Führung vorstellbar ist, der einen entsprechenden Gegendruck zum stoffschlüssigen Verbinden der Blechteile 2 ausübt.

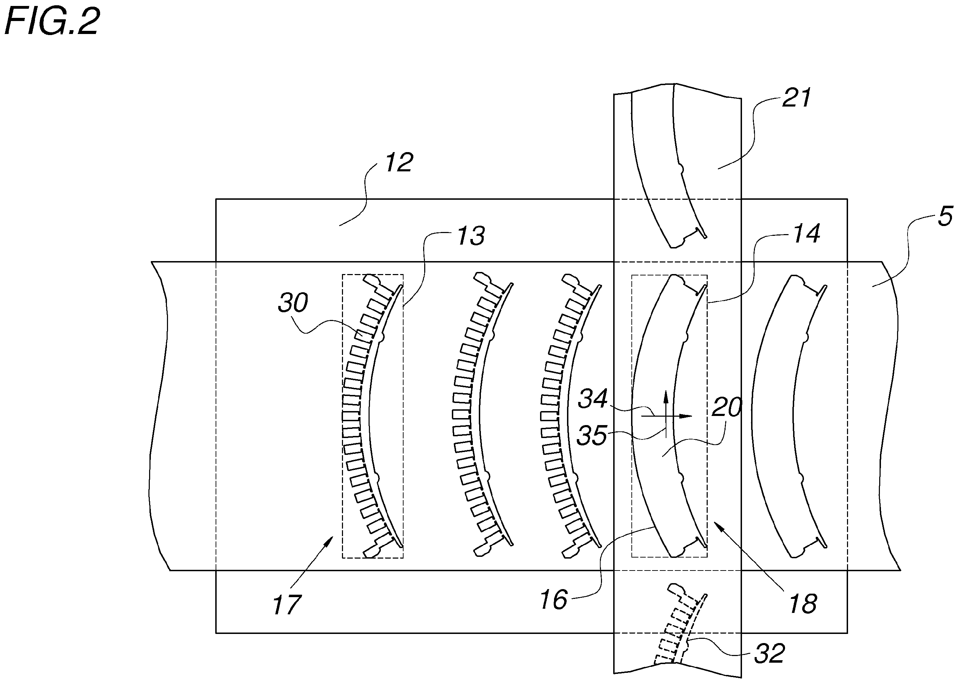

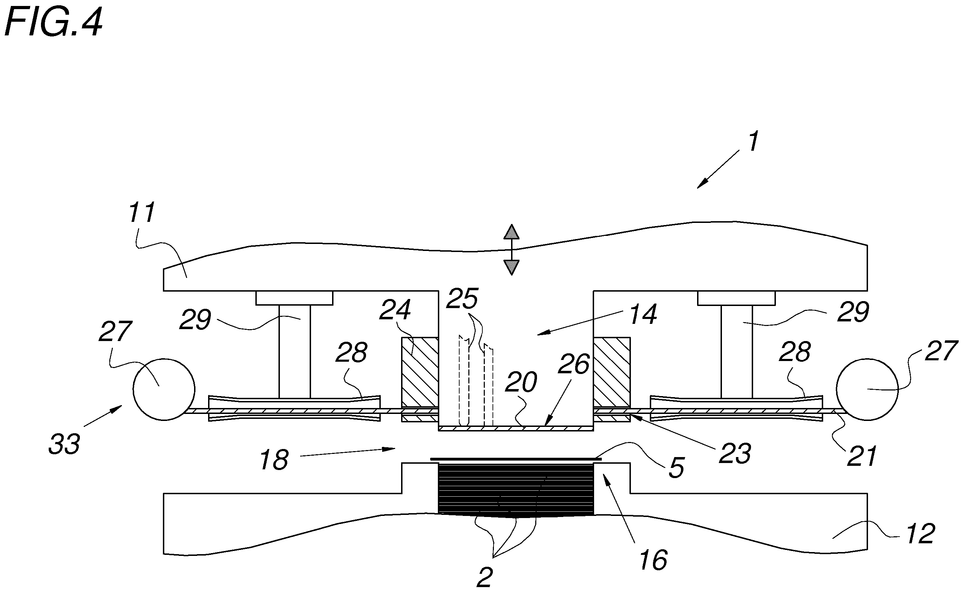

Um die, die Stapeleinrichtung 19 verlassenden Blechpakete 3 leichter voneinander trennen zu können, wird zumindest zwischen zwei gestapelten Blechteilen 2 über eine Zuführeinrichtung 33 ein Trennmittel 20 vorgesehen, das beispielsweise in Fig. 2 und 4 zu erkennen ist.

Dies wird erfindungsgemäß mithilfe der Stanzstufe 18 durchgeführt, mit der das Trennmittel 20 von einem Endlosband 21, beispielsweise von einem aufgerollten silikonbeschichteten Backpapier, freigestanzt wird - wie anhand von Fig. 2 in Draufsicht auf das Unterwerkzeug 12 das Stanzwerkzeug 10 näher dargestellt. So drückt die in Fig. 2 strichliert eingezeichnete Schneide 14 auf das Endlosband 21 und in weiterer Folge auf das Elektroband 5 und stanzt im Zusammenwirken mit der Matrize 16 des Unterwerkzeugs 12 sowohl das Trennmittel 20 als auch das Blechteil 2 frei. Entsprechend dieser nach den Figuren 1 bis 3 dargestellten Ausführungsform wird sohin das Trennmittel 20 vom oberhalb des Elektrobands 5 geführten Endlosband 21 freigestanzt. Zusätzlich wird mit diesem Freistanzen auch das Trennmittel 20 am freigestanzten Blechteil 2 bzw. an dessen Klebstoffschicht 8 angebracht und in die Stapeleinrichtung 19 eingebracht. Mit einem nachfolgend weiteren freigestanzten Blechteil 2 dient dieses Trennmittel 20 als Teilung zwischen den angrenzenden Blechteilen 2. Damit befindet sich auch das Trennmittel 20 zwischen zwei Blechteilen 2 in der Stapeleinrichtung 19, welcher struktureller Aufbau beispielsweise in der Fig. 3 unterhalb des vollständig dargestellten Blechpakets 3 zu erkennen ist, das auch das gerade eben von der Stanzstufe 18 freigestanzte Blechteil 2 mitumfasst. Eine zuverlässige Teilung der gestapelten und stoffschlüssig verbundenen Blechteile 2 in präzise Blechpakete 3 ist damit möglich - insbesondere auch dort, wo die Blechteile 2 die Stapeleinrichtung 19 verlassen und diese beispielsweise zum Weitertransport auf einem Förderband 22 vorgesehen werden.

Gemäß Fig. 2 wird ein Trennmittel 20 vom Endlosband 21 freigestanzt, das vollflächig der negativen Außenkontur des ausgestanzten Blechteils 2 folgt. Es ist aber auch denkbar, wie dies am Endlosband 21 der Fig. 2 strichliert angedeutet, das Endlosband 21 bereits mit einer Ausnehmung 32 anzuschneiden, bevor dieses der Stanzstufe 18 zugeführt wird. Damit wird mit der Stanzstufe 18 ein Trennmittel 20 freigestanzt, das der Kontur des Blechteils 2 folgt bzw. diesem auch nach dem Anbringen nicht vorsteht. Dies ist insbesondere bei Innenkonturen am Blechpaket 3 von Vorteil, die in weiterer Folge vom Trennmittel 20 auch nicht überdeckt werden. Dadurch ist beispielsweise vorstellbar, das Trennmittel 20 an einem Blechpaket 3 haften und damit verbleiben zu lassen. Selbstverständlich ist vorstellbar, das Trennmittel 20 vom Blechpaket 3 auch abzuziehen, was mit einem beidseitig antihaftbeschichteten Trennmittel 20 (z.B.: beidseitig silikonbeschichteten Backpapier) erleichtert werden kann.

Zudem ist nach Fig. 4 zu erkennen, dass die Schneide 14 der Stanzstufe 18 das Trennmittel 20 vor dem Blechteil 2 freistanzt. Hierzu wird das Endlosband 21 von der Zuführeinrichtung 33 durch einen Führungsspalt 23 des Niederhalters 24 geführt und so der Stanzstufe 18 zu- bzw. abgeführt. Zudem kann Niederhalter 24 gegenüber der Schneide 14 verlagert werden, wodurch das Trennmittel 20 von der Stanzstufe 18 freigestanzt werden kann. Das freigestanzte Trennmittel 20 wird in weiterer Folge durch in Unterdruckdüsen endenden Unterdruckleitungen 25 an der Formfläche 26 der Schneide 14 festgehalten und damit zumindest bis zum Elektroband 5 standfest geführt, wonach dann das Blechteil 2 vom Elektroband 5 freigestanzt wird. Zudem wird das auf Rollen 27 auf- und abgewickelte Endlosband 21 mit Führungselementen 28 an Führungssäulen 29 gegenüber dem Niederhalter 24 ausgerichtet.

Wie außerdem in der Fig. 2 zu entnehmen, verlaufen die Vorschubrichtungen 34, 35 des Elektrobands 5 und des Endlosbands 21 in der Stanzstufe 18 geneigt bzw. normal zueinander. Damit kann die Zuführung des Endlosbands 21 zur diesbezüglichen Stanzstufe 18 konstruktiv einfach gelöst werden.

## Patentansprüche

1. Verfahren zum Verbinden von Blechteilen (2) zu einem Blechpaket (3), bei dem Blechteile (2) von einem Elektroband (5) freigestanzt werden, die freigestanzten Blechteile (2) gestapelt und zu mehreren Blechpaketen (3) zumindest stoffschlüssig verbunden werden, wobei zumindest zwischen zwei gestapelten Blechteilen (2) ein Trennmittel (20) vorgesehen wird, um die Trennung der stoffschlüssig verbundenen Blechteile (2) in Blechpakete (3) zu erleichtern, wobei mit der Stanzstufe (18) zum Freistanzen des Blechteils (2) das Trennmittel (20) von einem Endlosband (21) sowohl freigestanzt als auch auf dem Blechteil (2) vorgesehen wird, wobei das Trennmittel (20) vom oberhalb des Elektrobands (5) geführten Endlosband (21) freigestanzt wird, **dadurch gekennzeichnet, dass** vor dem Freistanzen des Blechteils (2) das Trennmittel (20) vom Endlosband (21) freigestanzt und an eine Schneide (14) dieser Stanzstufe (18) gehalten wird.

2. Verfahren nach Anspruch 1, **dadurch gekennzeichnet, dass** die Blechteile (2) aus dem Elektroband (5) folgegestanzt werden.

3. Verfahren nach Anspruch 1 oder 2, **dadurch gekennzeichnet, dass** das Elektroband (5) vor dem Freistanzen wenigstens bereichsweise mit einer aushärtbaren, polymeren Klebstoffschicht (8) beschichtet wird.

4. Verfahren nach Anspruch 3, **dadurch gekennzeichnet, dass** das Trennmittel (20) auf der Klebstoffschicht (8) des Blechteils (2) aufgebracht wird.

5. Verfahren nach einem der Ansprüche 1 bis 4, **dadurch gekennzeichnet, dass** die Vorschubrichtungen (34, 35) von Endlosband (21) und Elektroband (5) in der Stanzstufe (18) geneigt, insbesondere normal, zueinander verlaufen.

6. Verfahren nach einem der Ansprüche 1 bis 5, **dadurch gekennzeichnet, dass** vor dem Freistanzen des Blechteils (2) das Trennmittel (20) vom Endlosband (21) freigestanzt und an die Schneide (14) dieser Stanzstufe (18) angesaugt wird.

7. Verfahren nach einem der Ansprüche 1 bis 6, **dadurch gekennzeichnet, dass** das Trennmittel (20) mit einer Antihaftbeschichtung versehen wird.

8. Verfahren nach einem der Ansprüche 1 bis 7, **dadurch gekennzeichnet, dass** das Endlosband (21) vor dem Freistanzen des Trennmittels (20) der Kontur des Blechteils (2) folgend angeschnitten wird.

9. Vorrichtung zum Verbinden von Blechteilen (2) zu einem Blechpaket (3) mit einem Stanzwerkzeug (10), das eine Stanzstufe (18) zum Freistanzen eines Blechteils (2) aus einem Elektroband (5) aufweist, mit einer Stapeleinrichtung (31) zum Stapeln und insbesondere zumindest stoffschlüssigen Verbinden der freigestanzten Blechteile (2) zu mehreren Blechpaketen (3) und mit einer Zuführeinrichtung (33) zum Vorsehen eines Trennmittels (20) zwischen mindestens zwei in der Stapeleinrichtung (31) gestapelten Blechteilen (2), um die Trennung der stoffschlüssig verbundenen Blechteile (2) in Blechpakete (3) zu erleichtern, wobei die Zuführeinrichtung (33) ein Endlosband (21) aufweist und dieses der Stanzstufe (18) derart zuführt, dass mit dieser Stanzstufe (18) das Trennmittel (20) vom Endlosband (21) sowohl freigestanzt als auch auf dem Blechteil (2) vorgesehen wird, **dadurch gekennzeichnet, dass** die Stanzstufe (18) einen Niederhalter (24) aufweist, wobei der Niederhalter (24) einen Führungsspalt (23) aufweist, durch den das Endlosband (21) zum Freistanzen des Trennmittels (20) vor dem Blechteil (2) durchgeführt wird.

10. Vorrichtung nach Anspruch 9, **dadurch gekennzeichnet, dass** die Vorschubrichtungen (34, 35) des Elektrobands (5) und des Endlosbands (21) in der Stanzstufe (18) geneigt, insbesondere normal, zueinander verlaufen.

## Claims

1. Method for joining sheet-metal parts (2) to form a sheet-metal stack (3), in which sheet-metal parts (2) are punched free from an electrical steel strip (5), the punched-free sheet-metal parts (2) are stacked and joined at least in a materially bonded manner to form a plurality of sheet-metal stacks (3), wherein a separating means (20) is provided at least between two stacked sheet-metal parts (2) in order to facilitate the separation of the materially bonded sheet-metal parts (2) into sheet-metal stacks (3), wherein with the punching stage (18) for punching free the sheet metal part (2), the separating means (20) is both punched free from an endless strip (21) and also provided on the sheet metal part (2), wherein the separating means (20) is punched free from the endless strip (21) guided above the electrical steel strip (5), **characterized in that**, before the sheet-metal part (2) is punched free, the separating means (20) is punched free from the endless strip (21) and held against a cutting edge (14) of this punching stage (18).

2. Method according to claim 1, **characterized in that** the sheet-metal parts (2) are punched from the electrical steel strip (5) in sequence.

3. Method according to claim 1 or 2, **characterized in that** the electrical steel strip (5) is coated at least in regions with a curable polymeric adhesive layer (8) prior to punching.

4. Method according to claim 3, **characterized in that** the separating means (20) is applied to the adhesive layer (8) of the sheet metal part (2).

5. Method according to one of claims 1 to 4, **characterized in that** the feed directions (34, 35) of endless strip (21) and electrical steel strip (5) in the punching stage (18) extend in an inclined manner, more particularly normal, to one another.

6. Method according to one of the claims 1 to 5, **characterized in that**, before the sheet-metal part (2) is punched free, the separating means (20) is punched free from the endless strip (21) and sucked onto the cutting edge (14) of this punching stage (18).

7. Method according to one of claims 1 to 6, **characterized in that** the separating means (20) is provided with a non-stick coating.

8. Method according to one of claims 1 to 7, **characterized in that** the endless strip (21) is cut to follow the contour of the sheet-metal part (2) before the separating means (20) is punched free.

9. Device for joining sheet-metal parts (2) to form a sheet-metal stack (3), having a punching tool (10) comprising a punching stage (18) for punching free a sheet-metal part (2) from an electrical steel strip (5), having a stacking device (31) for stacking and more particularly at least materially bonded joining the punched-free sheet metal parts (2) to form a plurality of sheet metal packs (3), and having a feed device (33) for providing a separating means (20) between at least two sheet-metal parts (2) stacked in the stacking device (31), in order to facilitate the separation of the materially bonded sheet-metal parts (2) into sheet-metal packs (3), wherein the feed device (33) comprises an endless strip (21) and feeds said strip to the punching stage (18) in such a way that, by means of this punching stage (18), the separating means (20) is both punched free from the endless strip (21) and also provided on the sheet-metal part (2), **characterized in that** the punching stage (18) has a hold-down device (24), wherein the hold-down device (24) comprises a guide gap (23) through which the endless belt (21) is guided in front of the sheet-metal part (2) in order to punch the separating means (20) free.

10. Device according to claim 9, **characterized in that** the feed directions (34, 35) of the electrical steel strip (5) and of the endless strip (21) in the punching station (18) extend in an inclined manner, more particularly normal, to one another.

## Revendications

1. Procédé pour assembler des pièces de tôle (2) en un paquet de tôles (3), dans lequel des pièces de tôle (2) sont découpées à l'emporte-pièce dans un feuillard magnétique (5), les pièces de tôle (2) découpées sont empilées et assemblées au moins par solidarité de matière en plusieurs paquets de tôles (3), dans lequel un moyen de séparation (20) est prévu au moins entre deux pièces de tôle (2) empilées pour faciliter la séparation des pièces de tôle (2) assemblées par solidarité de matière en paquets de tôles (3), dans lequel le moyen de séparation (20) est découpé avec l'étage d'emporte-pièce (18) pour la découpe à l'emporte-pièce de la pièce de tôle (2) à partir d'une bande sans fin (21) et prévu aussi sur la pièce de tôle (2), dans lequel le moyen de séparation (20) est découpé à l'emporte-pièce dans la bande sans fin (21) guidée au-dessus du feuillard magnétique (5), **caractérisé en ce qu'**avant la découpe de la pièce de tôle (2), le moyen de séparation (20) est découpé à l'emporte-pièce dans la bande sans fin (21) et retenu sur une lame (14) de cet étage d'emporte-pièce (18).

2. Procédé selon la revendication 1, **caractérisé en ce que** les pièces de tôle (2) sont découpées successivement dans le feuillard magnétique (5).

3. Procédé selon la revendication 1 ou 2, **caractérisé en ce que** le feuillard magnétique (5) est enduit au moins en partie d'une couche d'adhésif polymère (8) durcissable avant la découpe.

4. Procédé selon la revendication 3, **caractérisé en ce que** le moyen de séparation (20) est appliqué sur la couche d'adhésif (8) de la pièce de tôle (2).

5. Procédé selon l'une des revendications 1 à 4, **caractérisé en ce que** les directions d'avancement (34, 35) de la bande sans fin (21) et du feuillard magnétique (5) dans l'étage d'emporte-pièce (18) sont inclinées l'une vers l'autre, de préférence perpendiculaires.

6. Procédé selon l'une des revendications 1 à 5, **caractérisé en ce qu'**avant la découpe de la pièce de tôle (2), le moyen de séparation (20) est découpé à l'emporte-pièce dans la bande sans fin (21) et retenu par aspiration sur la lame (14) de cet étage d'emporte-pièce (18).

7. Procédé selon l'une des revendications 1 à 6, **caractérisé en ce que** le moyen de séparation (20) est muni d'un revêtement antiadhésif.

8. Procédé selon l'une des revendications 1 à 7, **caractérisé en ce que** la bande sans fin (21) est découpée avant la découpe du moyen de séparation (20) suivant le contour de la pièce de tôle (2).

9. Dispositif pour assembler des pièces de tôle (2) en un paquet de tôles (3) avec un outil de découpe (10) qui présente un étage d'emporte-pièce (18) pour découper une pièce de tôle (2) dans un feuillard magnétique (5), avec un dispositif d'empilage (31) pour l'empilage et en particulier l'assemblage au moins par solidarité de matière des pièces de tôle (2) découpées en plusieurs paquets de tôles (3) et avec un dispositif d'alimentation (33) destiné à fournir un moyen de séparation (20) entre au moins deux pièces de tôle (2) empilées dans le dispositif d'empilage (31) afin de faciliter la séparation des pièces de tôle (2) assemblées par solidarité de matière en paquets de tôles (3), dans lequel le dispositif d'alimentation (33) comporte une bande sans fin (21) et amène celle-ci à l'étage d'emporte-pièce (18) de telle manière que l'étage d'emporte-pièce (18) découpe le moyen de séparation (20) de la bande sans fin (21) et le dépose sur la pièce de tôle (2), **caractérisé en ce que** l'étage d'emporte-pièce (18) présente un élément presseur (24), lequel élément presseur (24) présente une fente de guidage (23) à travers laquelle la bande sans fin (21) est passée pour la découpe du moyen de séparation (20) avant la pièce de tôle (2).

10. Dispositif selon la revendication 9, **caractérisé en ce que** les directions d'avancement (34, 35) du feuillard magnétique (5) et de la bande sans fin (21) sont inclinées l'une vers l'autre dans l'étage d'emporte-pièce (18), en particulier perpendiculaires.
